# EUROPEAN PATENT SPECIFICATION

(11) **EP 1 395 055 B1**
(45) Date of publication and mention of the grant of the patent: **03.09.2008**
(21) Application number: 02018033.7
(22) Date of filing: 13.08.2002
(51) Int. Cl.: H04N 7/14

(54) **Method for providing access to video data and voice data of a video telephony call**
Verfahren zum Erlauben von Zugriff auf Video- und Tondaten eines Bildtelefonanrufes
Méthode donnant accès aux données vidéo et données audio d'un appel de téléfonie vidéo

(43) Date of publication of application: 03.03.2004
(73) Proprietor: TELEFONAKTIEBOLAGET LM ERICSSON (publ), 164 83 Stockholm (SE)
(72) Inventor: Hameleers, Heino, 6471 VN Kerkrade (NL); Hundscheidt, Frank, 6464 GC Kerkrade (NL)
(74) Representative: Kribber, Klaus-Dieter

(56) References cited:
- EP-A- 0 584 938
- US-A- 5 790 180
- US-A- 6 020 915
- US-A1- 2002 075 382

## Description

### Field of invention

The invention relates to a telecommunication network for providing access to video data and voice data of a video telephony call to a user who is using a first receiving unit operating according to an internet protocol and a second receiving unit for voice calls. The invention further relates to a method for setting up a video telephony call, to a multimedia gateway, and to a web server to perform that method.

### Description of prior art

In the past different solutions have been developed to provide means for video communication to users of telecommunication networks. Currently the number of potential users of video telephony services has been increased as solutions for setting up video connections via an internet protocol have been developed for a fixed internet and for third generation mobile networks. An example for a protocol for setting up a video telephony call via a fixed internet connection is the H.323 protocol of the International Telecommunication Union. Setting up a video connection in a third generation mobile network is described in the 3G.324M recommendation of the 3^{rd} Generation Partnership Project. However the number of potential users of this telephony service is still limited as at least two subscribers of a video telephony call must be in possession of a video telephony terminal. This keeps many potential users from purchasing a video telephony terminal and hinders the distribution of video telephony services.

A video telephony system for providing access to video data of a video call to a voice call terminal user, whose voice call terminal does not support the reception and presentation of video data is disclosed in US Patent US- A-5 790 180. According to US- A-5 790 180 video data received from a video telephony terminal is split into a voice portion and a video portion in a video telephony unit. The voice portion is transmitted via a voice call connection to a conventional voice call terminal and the video portion is transmitted via a cable television network to a television set collocated with the recipients voice call terminal. Furthermore US Patent application US 2001/075382 A1 discloses the utilization of cable television network for the full duplex transmission of video signals of a video telephony call. US Patent US- A-6 020 915 provides a platform enabling the participation of a user of an analogue voice terminal in a telephony conference with multimedia terminals in that the user of the voice terminal can share facsimile documents with the users of the multimedia terminals. In European Patent Application EP-A-0 584 938 discloses a video telephony system in that a coaxial cable network is used for transmitting video telephony signals for cable subscribers, and wherein cable subscriber numbers are administered to be identical to regular telephone numbers of collocated voice terminals.

### Object of the invention

It is object of the invention to overcome the above limitations and to provide video telephony services to a larger user group.

### Summary of the invention

This object is solved by the method of claim 1. The invention is further embodied in the multimedia gateway according to claim 13, and the computer program for controlling a multimedia gateway according to claim 15. Advantageous embodiments are described in the dependent claims.

It is an advantage of the invented telecommunication network and of the proposed method that access to the content of a video telephony call is offered to a user of a receiving unit operating according to an internet protocol and a receiving unit for voice calls. This is advantageous as the dissemination of receiving units operating according to an internet protocol and receiving units for voice calls is high. Thus video telephony services can be offered to a large user group.

Further advantageous is a method wherein the calling video telephony terminal is demanded to encode video data in a video data format appropriate for reception by a receiving unit operating according to the internet protocol. Encoding the video data in a video data format appropriate for reception by a receiving unit operating according to the internet protocol is advantageous, as transcoding of the video data of the video telephony call is avoided, thus saving processing power in the telecommunication network and minimizing the delay between the generation of the video data in the video telephony terminal and the reception of the video data in the receiving unit operating according to the internet protocol.

### Brief description of the drawings

- Fig. 1:: depicts an architecture and a flow of video and voice data according to the invention.
- Fig. 2: depicts a realization of receiving units according to the invention.
- Fig. 3: depicts a multimedia gateway according to the invention.

### Detailed description of embodiments

In the following the invention is described in more detail by means of embodiments and figures. Equal reference signs indicate equal elements.

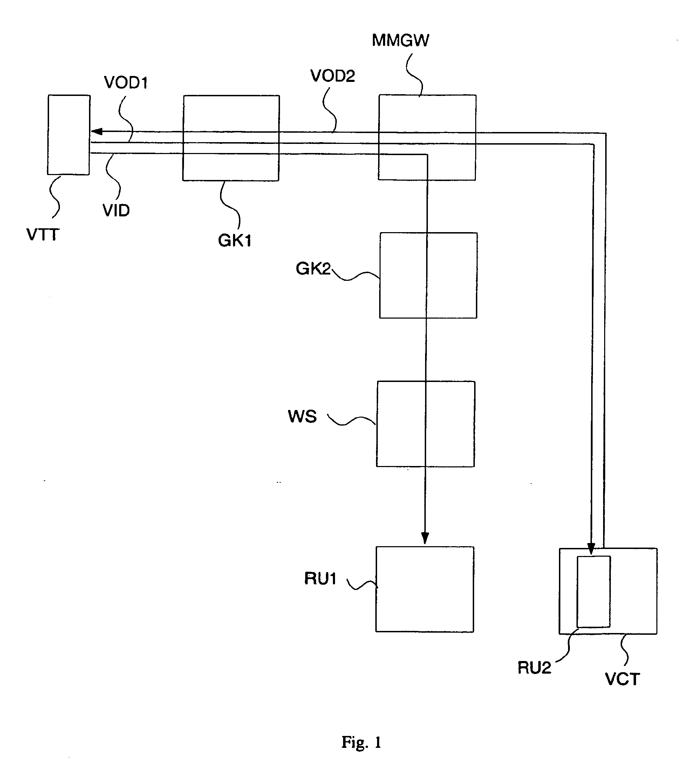

Figure 1 shows a video telephony terminal VTT as calling party of a video telephony call, a telecommunication network for providing access to video data VID and voice data VOD1 of a video telephony call originating from the video telephony terminal VTT to a user of a first receiving unit RU1 operating according to an intemet protocol and a second receiving unit RU2 for voice calls. The telecommunication network comprises a multimedia gateway MMGW and a web server WS. Figure 1 additionally shows a voice call terminal VCT comprising the second receiving unit RU2 for voice calls. Figure 1 also shows a first gatekeeper GK1 that can optionally be comprised in the telecommunication network as intermediate node between the video telephony terminal VTT and the multimedia gateway MMGW and a second gatekeeper GK2 that can optionally be comprised in the telecommunication network as intermediate node between the multimedia gateway MMGW and the web server WS. The flow of video data VID, first voice data VOD 1, and second voice data VOD2, all of them related to the video telephony call, is depicted with arrows.

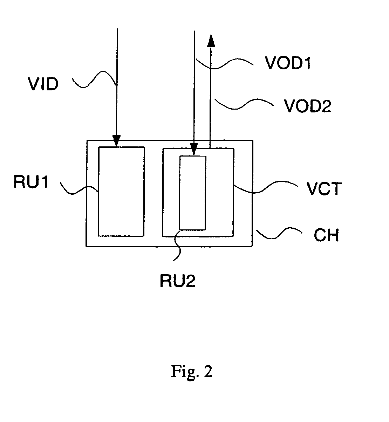

Figure 2 shows a realization of the first receiving unit RU1 and the called voice call terminal VCT comprising the second receiving unit RU2, wherein the first receiving unit RU1 and the second receiving unit RU2 reside in a common housing CH. The reception of video data VID and first voice data VOD1 as well as the sending of second voice data VOD2 are depicted with arrows.

In the following the call setup of the video telephony connection will be described together with different realizations of the functionality within the telecommunication network.

The video telephony terminal VTT is the calling party of a video telephony call. The video telephony terminal VTT can be connected to the multimedia gateway MMGW for setting up video telephony calls. The video telephony terminal VTT can be a fixed terminal or a mobile terminal. An example where the video telephony terminal VTT is a fixed terminal is a personal computer terminal, that can be connected to the multimedia gateway MMGW using a signaling connection according to the H.323 recommendation of the ITU (International Telecommunication Union) and a RTP (Real Time Protocol) connection for transmitting payload. In this scenario the first gatekeeper GK1 can be intermediate between the video telephony terminal VTT and the multimedia gateway MMGW. An example of a mobile video telephony terminal VTT is a mobile terminal according to the 3G.324M recommendation of the 3^{rd} Generation Partnership Project. In this case the signalling connection between the video telephony terminal VTT and the multimedia gateway MMGW can comprise a connection over a DTAP (Direct Transfer Application Part) protocol and an ISUP (Integrated Services Digital Network User Part) protocol and the connection for transmitting payload can contain a connection according to the 3G.324M recommendation.

The video telephony terminal VTT sends a call setup message for a video telephony call to the multimedia gateway MMGW and the call setup message is received in the multimedia gateway MMGW. The call setup message contains an indication that video data and voice data of the video telephony call shall be sent to different receiving units. In the call setup message a called party identifier can be a number according to the E.164 numbering plan of the ITU, wherein the number according to the E.164 numbering plan is related to the multimedia gateway MMGW and the number according to the E.164 numbering plan indicates that video data and voice data of the video telephony call shall be sent to different receiving units.

A video telephony connection is set up between the multimedia gateway MMGW and the video telephony terminal VTT for receiving in the multimedia gateway MMGW from the video telephony terminal VTT a video telephony stream containing video data VID of the demanded video data format and first voice data VOD1 and for transmitting from the multimedia gateway MMGW to the video telephony terminal VTT second voice data VOD2.

If the video telephony terminal VTT is a mobile terminal operating according to the 3^{rd} Generation Partnership Project recommendation 3G.324M, the video telephony connection can be a video telephony connection according to the 3G.324M recommendation. If the video telephony terminal VTT is a fixed personal computer terminal, the video telephony connection can comprise a signalling connection according to the ITU H.323 recommendation or a signalling connection according to the SIP (Session Initiation Protocol) of the IETF (Internet Engineering Task Force). For transmitting payload the RTP (Real Time Protocol) can be used. First voice data VOD1 and second voice data VOD2 can be encoded using an AMR (Adaptive Multirate Codec).

The video telephony terminal VTT sends a message containing information for contacting the called voice call terminal VCT containing the second receiving unit RU2. Said information for contacting the called voice call terminal can be an identification of the called voice call terminal. The voice call to be set up can be a voice call to a single user or a conference call to multiple users. If the voice call is a conference call, the information for contacting the called voice call terminal VCT can be an indication of a conferencing unit, that can be called by the voice call terminal VCT. The information for contacting the called voice call terminal can be sent in the call setup message or in a separate message. If the information for contacting the called voice call terminal is sent in a separate message, said information can be sent in band over the video telephony connection for example as parameter of a message according to the H.245 protocol of the ITU.

The multimedia gateway MMGW determines that video data and voice data of the video telephony call shall be sent to different receiving units. The multimedia gateway MMGW sets up a voice call to the called voice call terminal VCT. In the case that a conference call is set up, the multimedia gateway MMGW sets up a conference call to the conferencing unit and the conferencing unit has to be contacted by the voice call terminals that participate in the conference call.

The called voice call terminal VCT can be a fixed or a mobile terminal. The signalling connection between the multimedia gateway MMGW and the called voice call terminal VCT can contain a signalling connection over an ISUP protocol, a signaling connection over a DSS 1 (Digital Subscriber Signaling system No. 1) protocol, and a connection for transmitting payload can be a connection according to a G.711 specification of the ITU. Alternatively the payload can be encoded using an AMR (Adaptive Multirate Codec). The called voice call terminal VCT containing the second receiving unit RU2 for voice calls can be contained in a common housing CH with the first receiving unit RU1 operating according to an IP (intemet protocol). An example for a voice call terminal VCT and a receiving unit operating according to an IP (internet protocol) that reside in a common housing CH is a mobile class A terminal according to the 3^{rd} Genration Partnership project, that can be connected to the multimedia gateway MMGW via a circuit switched connection and to the web server WS via a packet switched connection.

The multimedia gateway MMGW demands from the video telephony terminal VTT to encode video data in a video data format appropriate for reception by a receiving unit operating according to an IP (intemet protocol). In an alternative embodiment the second gatekeeper GK2 can be intermediate between the multimedia gateway MMGW and the web server WS. In this case the multimedia gateway MMGW can send over a signalling connection according to the ITU H.323 recommendation a call setup message for a video telephony call to the second gatekeeper GK2. The second gatekeeper GK2 demands from the video telephony terminal VTT to encode video data VID in a video data format appropriate for reception by a receiving unit operating according to an IP (internet protocol). In a further embodiment the multimedia gateway MMGW can send over a signalling connection according to the ITU H.323 recommendation a call setup message for a video telephony call to the web server WS. The web server WS demands from the video telephony terminal VTT to encode video data in a video data format appropriate for reception by a receiving unit operating according to an IP. Examples for video data formats that are appropriate for reception by a receiving unit operating according to an IP are an MPEG (Motion Picture Expert Group) format or baseline encoding according to the H.263 recommendation. The step of demanding the video telephony terminal to encode video data in a format appropriate for reception by a receiving unit operating according to an IP can be embodied as acknowledgement of a request from the video telephony terminal VTT, wherein the request comprises an indication of the video data format. In the embodiment, wherein the multimedia gateway MMGW demands the video telephony terminal VTT to encode video data in a data format appropriate for reception by a receiving unit operating according to an IP the video telephony terminal VTT can for example send different requests comprising indications of different video data formats to the multimedia gateway MMGW. The multimedia gateway MMGW selects a set of video data formats among the video data formats of which it has received an indication, wherein the selected video data formats are appropriate for reception by a receiving unit operating according to an IP. The multimedia gateway MMGW sends acknowledgements related to the video data formats which are appropriate for reception by a receiving unit operating according to an IP to the video telephony terminal VTT, and the multimedia gateway sends messages rejecting the video data formats that are not appropriate for reception by a receiving unit operating according to an IP to the video telephony terminal VTT. The video telephony terminal VTT can then select a video data format among the video data formats, for which it has received an acknowledgement, and encodes video data in the selected video data format. Thus video data is encoded in a video data format appropriate for reception by a receiving unit operating according to an IP.

The multimedia gateway MMGW receives a video telephony stream via the video telephony connection, the video telephony stream containing video data VID of the demanded video data format and first voice data VOD1.

In an embodiment of the invention one or more still images are sent from the video telephony terminal to the multimedia gateway MMGW via the video telephony connection. Said one or more still images are encoded in an image file format that is appropriate for reception by an IP (internet protocol) client, e.g. a JPEG (Joint Photographic Experts Group) file format, a TIFF (Tagged Image File Format), or a GIFF (Graphics Interchange Format). The one or more still images can be embedded in a stream according to the ITU T.120 recommendation.

The multimedia gateway MMGW extracts the first voice data VOD1 from the video telephony stream and sends the first voice data VOD 1 to the second receiving unit RU2. The multimedia gateway MMGW can transcode the first voice data VOD1. For example the multimedia gateway MMGW can receive the first voice data VOD1 from the video telephony terminal VTT in an AMR format and transcode the first voice data VOD1 to a format according to the G.711 specification of the ITU for sending the first voice data VOD1 to the second receiving unit.

Furthermore the multimedia gateway MMGW receives the second voice data VOD2 from the called voice call terminal VCT via the voice call. It transmits the second voice data VOD2 to the video telephony terminal VTT via the video telephony connection. The multimedia gateway MMGW can transcode the second voice data VOD2. For example the multimedia gateway MMGW can receive the second voice data VOD2 from the voice call terminal in a format according to the G.711 specification of the ITU and transcode the second voice data VOD2 to an AMR format for sending the second voice data VOD2 to the video telephony terminal VTT.

Furthermore the multimedia gateway MMGW extracts the video data VID from the video telephony stream. It determines the web server WS according to information of the video telephony call and sends the video data VID to the web server WS. The multimedia gateway MMGW can for example determine the web server WS based on an identification of the video telephony terminal VTT. Alternatively the multimedia gateway MMGW can determine the web server WS based on an identification of the called voice call terminal VCT.

The multimedia gateway MMGW is connected to the web server WS for transmitting the video data VID to the web server WS.

The multimedia gateway MMGW can be for example connected to the web server WS via a session according to the RTSP (Real Time Streaming Protocol) and transmit the video data VID in said session over a connection using RTP (Real Time Protocol) as transport protocol. Alternatively the multimedia gateway MMGW can be connected to the web server WS over a signaling connection according to the ITU (International Telecommunication Union) H.323 recommendation and transmit the video data VID over a connection using RTP as transport protocol. In a further embodiment with the second gatekeeper GK2 as intermediate node between the multimedia gateway MMGW and the web server WS, the signaling connection between the multimedia gateway MMGW and the second gatekeeper GK2 can be a signaling connection according to the ITU H.323 recommendation and the second gatekeeper GK2 can be connected to the web server WS in a session according to the RTSP (Real Time Streaming Protocol). The video data VID can be transmitted from the multimedia gateway MMGW to the second gatekeeper GK2 and from the second gatekeeper GK2 to the web server WS over the RTP (Real Time Protocol) as transport protocol.

In the embodiment of the invention, wherein the multimedia gateway MMGW has received one or more still images from the video telephony terminal VTT, the multimedia gateway MMGW determines that said one or more still images have to be sent to the web server WS and sends said one or more still images to the web server WS. Said one or more still images can be extracted from a stream according to the ITU T.120 recommendation, be embedded in a file according to the HTML (HyperText Markup Language), and the HTML file comprising said one or more still images can be sent to the web server WS in a session according to the HTTP (HyperText Transfer Protocol). In an alternative embodiment, a stream according to the protocol of the ITU T.120 recommendation comprising said one or more still images is transmitted to the second gatekeeper GK2 that is intermediate between the multimedia gateway MMGW and the web server WS. The second gatekeeper GK2 extracts said one or more still images from the stream according to the protocol of the ITU T.120 recommendation, embeds said one or more still images in a HTML file, and sends the HTML file comprising said one or more still images to the web server WS in an HTTP session. In a further embodiment a stream according to the ITU T.120 recommendation is sent to the web server WS, and the web server WS extracts the one or more still images from the further stream and embeds said one or more still images in an HTML file.

The web server WS receives the video data VID, stores the video data VID, and provides the video data VID to the first receiving unit RU1 operating according to an IP (internet protocol). The video data VID can for example be stored in a video buffer. In the case that a conference call is set up, the video data VID can be distributed to different receiving units operating according to an IP. To deliver the video data VID to different receiving units operating according to an IP in an efficient way multicast mechanisms can be used.

In the embodiment wherein one or more still images have been sent to the web server WS, the web server WS receives said one or more still images, stores the one or more still images, for example in an image buffer, and provides the one or more still images to the first receiving unit RU1 operating according to an IP (internet protocol).

The first receiving unit RU1 can be contained in a fixed or a mobile internet terminal. An example of a mobile internet terminal is a mobile class A terminal according to the 3^{rd} Genration Partnership project. The mobile class A terminal is an example where the first receiving unit RU1 operating according to an IP (internet protocol) can be comprised in a common housing CH with the second receiving unit RU2 for voice calls.

For receiving the video data VID from the web server WS the first receiving unit RU1 can be connected to the web server WS in a session according to the RTSP (Real Time Streaming Protocol). The video data VID can be transmitted by the web server WS to the first receiving unit RU1 over the RTP (Real Time Protocol) as transport protocol. If a session according to the RTSP is used for providing the video data VID to the first receiving unit RU1, an RTSP address can be used for accessing the video data VID. The RTSP address of the video data VID containing the video data VID can be provided to the user of the first receiving unit RU1 in relation to the calling party number of the calling video telephony terminal VTT or it can be provided to the user of the first and the second receiving unit in the voice call to the voice call terminal VCT. In the first receiving unit RU1 the video data VID can be received in an RTSP player. For decoding and rendering the video data VID, the RTSP player can comprise a MPEG (Motion Picture Expert Group) decoder.

In an alternative embodiment, the video data VID can be embedded in an HTML page, and the HTML page can be transmitted to the first receiving unit RU1 in a session according to the HTTP (HypertText Transfer Protocol). To display the HTML page, the first receiving unit RU1 can comprise a webbrowser, that comprises a MPEG (Motion Picture Expert Group) decoder as plug-in to decode and display the video data VID.

The URL (Uniform Resource Locator) related to the HTML page can be provided to the user of the first receiving unit RU1 and the user of the first receiving unit RU1 can access the video data VID via said URL. The URL related to the HTML page can be provided to the user of the first receiving unit RU1 in relation to the calling party number of the calling video telephony terminal VTT or it can be provided to the user of the first and the second receiving unit in the voice call to the voice call terminal VCT.

In the embodiment wherein the one or more still images are provided to the first receiving unit RU1, said one or more still images can be embedded in a page according to the HTML (HyperText Markup Language) and the HTML page can be transmitted to the first receiving unit RU1 in a session according to the HTTP (HyperText Transfer Protocol). The URL (Uniform Resource Locator) related to the HTML page can be provided to the user of the first receiving unit RU1 in relation to the calling party number of the calling video telephony terminal VTT or it can be provided to the user of the first and the second receiving unit in the voice call to the voice call terminal VCT. If the video data VID is likewise embedded in an HTML page, the video data VID and the one or more still images can be embedded in a common HTML page, or the URL (Uniform Resource Locator) of one of the pages can be embedded as link in the other HTML page.

In the embodiment wherein the one or more still images are provided to the first receiving unit RU1, said one or more still images can be embedded in a WML page and the WML page can be transmitted to the first receiving unit RU1 in a session according to the WAP (Wireless Application Protocol). The URL (Uniform Resource Locator) related the WML page can be provided to the user of the first receiving unit RU1 in relation to the calling party number of the calling video telephony terminal VTT or it can be provided to the user of the first and the second receiving unit in the voice call to the voice call terminal VCT. In an alternative embodiment the URL (Uniform Resource Locator) related to the WML page can be provided to the user of the first receiving unit RU1 using a WAP push mechanism i.e. the URL (Uniform Resource Locator) related the WML page is comprised in a SMS (Short Message Service) message to the first receiving unit RU1. To address the first receiving unit RU1 in the SMS message a MSISDN (Mobile Station Integrated Services Digital Network Number) can be used.

The invented methods are described in the embodiments and in the claims as a succession of steps. However a person skilled in the art can execute the described steps in a different succession without departing from the scope of the invention.

In a preferred embodiment of the invention a web server WS providing access to video data VID of a video telephony call originating from a video telephony terminal VTT to a user of a receiving unit operating according to an IP (internet protocol) comprises a storage unit for storing video data. The storage unit can be for example a video buffer. The web server WS further comprises interfaces for sending and receiving video data. A first interface of the web server WS is adapted to receive video data from a multimedia gateway MMGW and a second interface of the web server WS is adapted to provide the video data to the receiving unit RU1 operating according to the IP (internet protocol).

To demand the video telephony terminal VTT to encode video data VID in a video data format appropriate for reception by a receiving unit operating according to the IP (internet protocol) the web server WS can comprise an interface for sending messages towards the video telephony terminal VTT. Said messages can comprise a message demanding the video telephony terminal VTT to encode video data VID in a video data format appropriate for reception by a receiving unit RU1 according to the IP (internet protocol).

In a preferred embodiment of the invention a computer program controls a multimedia gateway MMGW in a way that the multimedia gateway MMGW executes the steps of the invented method that are related to the multimedia gateway MMGW.

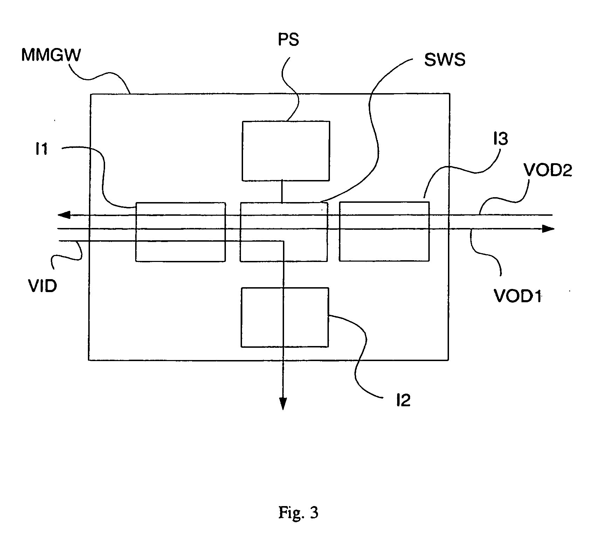

Figure 3 shows a multimedia gateway MMGW operating according to the invented method.

The multimedia gateway MMGW is adapted to handle a video telephony call providing access to video data VID and voice data VOD1 of a video telephony call to a user of a first receiving unit RU1 operating according to an internet protocol and a second receiving unit RU2 for voice calls. The multimedia gateway MMGW comprises an interface for receiving messages and interfaces I1; I2; I3 for sending and receiving video data VID and voice data VOD1; VOD2. Said interfaces comprise a video telephony interface I1 for receiving a video telephony stream containing video data VID and first voice data VOD1 and for transmitting second voice data VOD2, a web interface I2 for transmitting video data VID, and a voice call interface I3 for sending first voice data VOD1 and receiving second voice data VOD2. The multimedia gateway further comprises a processing system PS adapted to set up a video telephony call. The processing system PS is adapted to determine that video data and voice data of the video telephony call shall be sent to different receiving units. The processing system PS is further adapted to set up a voice call to the called voice call terminal VCT, to set up a video telephony connection to the video telephony terminal VTT, and to determine a web server WS for sending video data towards. The multimedia gateway MMGW further comprises a switching system SWS for splitting video data VID and voice data VOD1 of the video telephony call. The switching system is adapted to extract video data VID from the video telephony stream, to route video data VID towards the web server WS, to extract first voice data VOD1 from the video telephony stream, to route first voice data VOD1 towards the second receiving unit RU2, to receive second voice data VOD2 from the called voice call terminal VCT via the voice call, and to route the second voice data VOD2 towards the video telephony terminal VTT.

In the embodiment wherein the one or more still images are provided to the first receiving unit RU1 the video telephony interface I1 is adapted to receive a video telephony stream comprising a still image. The web interface I2 is adapted to transmit a still image to a web server WS. In this embodiment the switching system SWS is adapted to extract the still image from the video telephony stream and to route the still image towards the web server WS.

To demand the video telephony terminal VTT to encode video data in a video data format appropriate for reception by a receiving unit operating according to the IP (internet protocol), the multimedia gateway MMGW can be provided with an interface for sending messages. Said messages can comprise a message demanding the video telephony terminal VTT to encode video data in a video data format appropriate for reception by a receiving unit operating according to the IP (internet protocol).

## Claims

1. Method for setting up a video telephony call providing video data (VID) and voice data (VOD1) to a user of a first receiving unit (RU1) operating according to an internet protocol and of a second receiving unit (RU2) for voice calls, the method comprising the steps of:
- receiving in a multimedia gateway (MMGW) a call setup message for a video telephony call, the call setup message originating from a video telephony terminal (VTT)
- setting up a video telephony connection between the video telephony terminal (VTT) and the multimedia gateway (MMGW),
- receiving in the multimedia gateway (MMGW) a message comprising information for contacting a called voice call terminal (VCT) containing the second receiving unit (RU2),
- determining in the multimedia gateway (MMGW) that video data and voice data of the video telephony call shall be sent to different receiving units,
- setting up in the multimedia gateway (MMGW) a voice call to the called voice call terminal (VCT),
- sending a demand to encode video data in a video data format appropriate for reception by a receiving unit (RU1) operating according to the internet protocol,
- receiving in the multimedia gateway (MMGW) a video telephony stream via the video telephony connection, the video telephony stream containing video data (VID) of the demanded video data format and first voice data (VOD1),
- extracting in the multimedia gateway (MMGW) the first voice data (VOD1) from the video telephony stream,
- sending by the multimedia gateway (MMGW) the first voice data (VOD1) to the second receiving unit (RU2),
- receiving in the multimedia gateway (MMGW) the second voice data (VOD2) from the called voice call terminal (VCT) via the voice call,
- transmitting by the multimedia gateway (MMGW) the second voice data (VOD2) to the video telephony terminal (VTT) via the video telephony connection,
- extracting in the multimedia gateway (MMGW) the video data (VID) from the video telephony stream for sending the video data towards the first receiving unit (RU1).

2. Method for setting up a video telephony call according to claim 1, wherein the call set up message comprises an indication, that video data and voice data of the video telephony call shall be sent to different receiving units.

3. Method for setting up a video telephony call according to claim 1, wherein the call set up message comprises a number according to an E.164 numbering plan as called party number, wherein the number according to a E.164 numbering plan is related to the multimedia gateway (MMGW) and indicates that video data and voice data of the video telephony call shall be sent to different receiving units.

4. Method for setting up a video telephony call according to any of the preceding claims, wherein the demand to encode video data in a video data format appropriate for reception by a receiving unit operating according to the internet protocol is sent from the multimedia gateway (MMGW) to the video telephony terminal (VTT).

5. Method for setting up a video telephony call according to any of the claims 1 - 3, wherein the multimedia gateway (MMGW) sends a call set up message to a gatekeeper to demand the gatekeeper to demand the video telephony terminal (VTT) to encode video data in a video data format appropriate for reception by a receiving unit operating according to the internet protocol.

6. Method for setting up a video telephony call according to any of the claims 1 - 3, wherein the multimedia gateway (MMGW) sends a call set up message to a web server to demand the web server to demand the video telephony terminal (VTT) to encode video data in a video data format appropriate for reception by a receiving unit operating according to the internet protocol.

7. Method for setting up a video telephony call according to any of the preceding claims, wherein the demand to encode video data is sent as an acknowledgement responsive to a request comprising an indication of the video data format, said request sent from the video telephony terminal.

8. Method for setting up a video telephony call according to any of the preceding claims, comprising the step of determining by the multimedia gateway (MMGW) a web server (WS) according to information of the video telephony call and sending the video data to the web server.

9. Method for setting up a video telephony call according to claim 8 comprising the steps of:
- receiving the video data (VID) in the web server (WS),
- storing the video data (VID) in the web server (WS),
- providing the video data (VID) to the first receiving unit (RU1) by the web server (WS).

10. Method according to claim 9, comprising the following steps:
- sending at least one still image to the multimedia gateway (MMGW) via the video telephony connection,
- determining in the multimedia gateway (MMGW) that the still image has to be sent to the web server (WS), and
- sending the still image to the web server (WS).

11. Method for setting up a video telephony call according to any of the claims 1 - 7, comprising sending the video data to a gatekeeper for further transmission to a web server.

12. Method according to any of the preceding claims, wherein the first voice data (VOD1) and the second voice data (VOD2) are transcoded in the multimedia gateway (MMGW).

13. Multimedia gateway (MMGW) adapted to handle a video telephony call providing access to video data (VID) and voice data (VOD1) of a video telephony call to a user of a first receiving unit (RU1) operating according to an internet protocol and of a second receiving unit (RU2) for voice calls, wherein the multimedia gateway (MMGW) comprises an interface for receiving messages and interfaces (I1; 12; I3) for sending and receiving video data (VID) and voice data (VOD1; VOD2), said interfaces comprising a video telephony interface (I1) for receiving a video telephony stream containing video data (VID) and first voice data (VOD1) and for transmitting second voice data (VOD2), a web interface (I2) for transmitting video data (VID), a voice call interface (I3) for sending first voice data (VOD1) and receiving second voice data (VOD2), and an interface for sending a message demanding the video telephony terminal (VTT) to encode video data in a video data format appropriate for reception by a receiving unit operating according to an internet protocol, the multimedia gateway (MMGW) further comprising a processing system (PS) adapted to handle a video telephony call, wherein the processing system (PS) is adapted to determine that video data and voice data of the video telephony call shall be sent to different receiving units, the processing system (PS) further being adapted to set up a voice call to the called voice call terminal (VCT) to set up a video telephony connection to a video telephony terminal (VTT), and to determine a web server (WS) for sending video data (VID) towards said web server, the multimedia gateway (MMGW) further comprising a switching system (SWS) for splitting video data (VID) and voice data (VOD1) of the video telephony call, wherein the switching system (SWS) is adapted to extract video data (VID) from the video telephony stream, to route video data (VID) towards the web server (WS), to extract first voice data (VOD1) from the video telephony stream, to route first voice data (VOD1) towards the second receiving unit (RU2), to receive second voice data (VOD2) from the called voice call terminal (VCT) via the voice call, and to route the second voice data (VOD2) towards the video telephony terminal (VTT).

14. Multimedia gateway (MMGW) according to claim 13, wherein the video telephony interface (I1) is adapted to receive a video telephony stream comprising a still image, the web interface (I2) is adapted to transmit a still image, the processing system is adapted to determine that the still image has to be sent to a web server (WS), and the switching system (SWS) is adapted to extract the still image from the video telephony stream and to route the still image towards the web server (WS).

15. Computer program for controlling a multimedia gateway (MMGW) in a way that the multimedia gateway (MMGW) executes a method according to any of the claims 1 to 12.

## Patentansprüche

1. Verfahren zum Aufbauen eines Videotelefonie-Anrufs, der Videodaten (VID) und Sprachdaten (VOD1) für einen Benutzer einer ersten Empfangseinheit (RU1), die gemäß einem Internetprotokoll funktioniert, und einer zweiten Empfangseinheit (RU2) für Sprachanrufe bereitstellt, wobei das Verfahren die folgenden Schritte umfasst:
- Empfangen in einem Multimedia-Gateway (MMGW) einer Rufaufbaunachricht für einen Videotelefonie-Anruf, wobei die Rufaufbaunachricht von einem Videotelefonie-Endgerät (VVT) abgeht,
- Aufbauen einer Videotelefonie-Verbindung zwischen dem Videotelefonie-Endgerät (VTT) und dem Multimedia-Gateway (MMGW),
- Empfangen im Multimedia-Gateway (MMGW) einer Nachricht, die Information zum Kontaktieren eines angerufenen Sprachanrufendgeräts (VCT) umfasst, das die zweite Empfangseinheit (RU2) enthält,
- Bestimmen im Multimedia-Gateway (MMGW), dass Videodaten und Sprachdaten des Videotelefonie-Anrufs an verschiedene Empfangseinheiten gesendet werden sollen,
- Aufbauen im Multimedia-Gateway (MMGW) eines Sprachanrufs zum angerufenen Sprachanrufendgerät (VCT),
- Senden einer Aufforderung zum Codieren von Videodaten in einem Videodatenformat, das zum Empfang durch eine Empfangseinheit (RU1) geeignet ist, die gemäß dem Internetprotokoll funktioniert,
- Empfangen im Multimedia-Gateway (MMGW) eines Videotelefonie-Streams über die Videotelefonie-Verbindung, wobei der Videotelefonie-Stream Videodaten (VID) des angeforderten Videodatenformats und erste Sprachdaten (VOD1) enthält,
- Extrahieren im Multimedia-Gateway (MMGW) der ersten Sprachdaten (VOD1) aus dem Videotelefonie-Stream,
- Senden durch das Multimedia-Gateway (MMGW) der ersten Sprachdaten (VOD1) an die zweite Empfangseinheit (RU2),
- Empfangen im Multimedia-Gateway (MMGW) der zweiten Sprachdaten (VOD2) vom angerufenen Sprachanrufendgerät (VCT) über den Sprachanruf,
- Senden durch das Multimedia-Gateway (MMGW) der zweiten Sprachdaten (VOD2) an das Videotelefonie-Endgerät (VTT) über die Videotelefonie-Verbindung,
- Extrahieren im Multimedia-Gateway (MMGW) der Videodaten (VIS) aus dem Videotelefonie-Stream, um die Videodaten zur ersten Empfangseinheit (RU1) zu senden.

2. Verfahren zum Aufbauen eines Videotelefonie-Anrufs nach Anspruch 1, wobei die Rufaufbaunachricht eine Angabe umfasst, dass Videodaten und Sprachdaten des Videotelefonie-Anrufs an verschiedene Empfangseinheiten gesendet werden sollen.

3. Verfahren zum Aufbauen eines Videotelefonie-Anrufs nach Anspruch 1, wobei die Rufaufbaunachricht eine Nummer gemäß einem E.164 Rufnummernplan als Zielteilnehmernummer umfasst, wobei die Nummer gemäß einem E.164 Rufnummernplan mit dem Multimedia-Gateway (MMGW) in Beziehung steht und angibt, dass Videodaten und Sprachdaten des Videotelefonie-Anrufs an verschiedene Empfangseinheiten gesendet werden sollen.

4. Verfahren zum Aufbauen eines Videotelefonie-Anrufs nach einem der vorhergehenden Ansprüche, wobei die Aufforderung zum Codieren von Videodaten in einem Videodatenformat, das zum Empfang durch eine Empfangseinheit geeignet ist, die gemäß dem Internetprotokoll funktioniert, vom Multimedia-Gateway (MMGW) an das Videotelefonie-Endgerät (VTT) gesendet wird.

5. Verfahren zum Aufbauen eines Videotelefonie-Anrufs nach einem der Ansprüche 1 bis 3, wobei das Multimedia-Gateway (MMGW) eine Rufaufbaunachricht an einen Gatekeeper sendet, um den Gatekeeper aufzufordern, das Videotelefonie-Endgerät (VTT) aufzufordern, Videodaten in einem Videodatenformat zu codieren, das zum Empfang durch eine Empfangseinheit geeignet ist, die gemäß dem Internetprotokoll funktioniert.

6. Verfahren zum Aufbauen eines Videotelefonie-Anrufs nach einem der Ansprüche 1 bis 3, wobei das Multimedia-Gateway (MMGW) eine Rufaufbaunachricht an einen Webserver sendet, um den Webserver aufzufordern, das Videotelefonie-Endgerät (VTT) aufzufordern, Videodaten in einem Videodatenformat zu codieren, das zum Empfang durch eine Empfangseinheit geeignet ist, die gemäß dem Internetprotokoll funktioniert.

7. Verfahren zum Aufbauen eines Videotelefonie-Anrufs nach einem der vorhergehenden Ansprüche, wobei die Aufforderung zum Codieren von Videodaten in einem Videodatenformat als eine Bestätigung als Reaktion auf eine Anforderung gesendet wird, die eine Angabe des Videodatenformats umfasst, wobei die Anforderung vom Videotelefonie-Endgerät gesendet wird.

8. Verfahren zum Aufbauen eines Videotelefonie-Anrufs nach einem der vorhergehenden Ansprüche, umfassend den Schritt des Bestimmens durch das Multimedia-Gateway (MMGW) eines Webservers gemäß der Information des Videotelefonie-Anrufs und Sendens der Videodaten an den Webserver.

9. Verfahren zum Aufbauen eines Videotelefonie-Anrufs nach Anspruch 8, umfassend die folgenden Schritte:
- Empfangen der Videodaten (VID) im Webserver (WS),
- Speichern der Videodaten (VID) im Webserver (WS),
- Bereitstellen der Videodaten (VID) für die erste Empfangseinheit (RU1) durch den Webserver (WS).

10. Verfahren nach Anspruch 9, umfassend die folgenden Schritte:
- Senden wenigstens eines Standbildes an das Multimedia-Gateway (MMGW) über die Videotelefonie-Verbindung,
- Bestimmen im Multimedia-Gateway (MMGW), dass das Standbild an den Webserver (MS) gesendet werden muss, und
- Senden des Standbildes an den Webserver (WS).

11. Verfahren zum Aufbauen eines Videotelefonie-Anrufs nach einem der Ansprüche 1 bis 7, umfassend ein Senden der Videodaten an einen Gatekeeper zur Weitersendung an einen Webserver.

12. Verfahren nach einem der vorhergehenden Ansprüche, wobei die ersten Sprachdaten (VOD1) und die zweiten Sprachdaten (VOD2) im Multimedia-Gateway (MMGW) umcodiert werden.

13. Multimedia-Gateway (MMGW), das so ausgelegt ist, dass es einen Videotelefonie-Anruf abwickelt, um Zugang zu Videodaten (VID) und Sprachdaten (VOD1) eines Videotelefonie-Anrufs für einen Benutzer einer ersten Empfangseinheit (RU1), die gemäß einem Internetprotokoll funktioniert, und einer zweiten Empfangseinheit (RU2) für Sprachanrufe bereitzustellen, wobei das Multimedia-Gateway (MMGW) eine Schnittstelle zum Empfangen von Nachrichten und Schnittstellen (11; 12; 13) zum Senden und Empfangen von Videodaten (VID) und Sprachdaten (VOD1; VOD2) umfasst, und die Schnittstellen eine Videotelefonie-Schnittstelle (11) zum Empfangen eines Videotelefonie-Streams, der Videodaten (VID) und erste Sprachdaten (VOD1) enthält, und zum Senden von zweiten Sprachdaten (VOD2), eine Webschnittstelle (12) zum Senden von Videodaten (VID), eine Sprachanrufschnittstelle (13) zum Senden von ersten Sprachdaten (VOD1) und Empfangen von zweiten Sprachdaten (VOD2) sowie eine Schnittstelle zum Senden einer Nachricht umfassen, um das Videotelefonie-Endgerät (VTT) aufzufordern, Videodaten in einem Videodatenformat zu codieren, das zum Empfang durch eine Empfangseinheit geeignet ist, die gemäß einem Internetprotokoll funktioniert, das Multimedia-Gateway (MMGW) ferner ein Verarbeitungssystem (PS) umfasst, das so ausgelegt ist, dass es einen Videotelefonie-Anruf abwickelt, wobei das Verarbeitungssystem (PS) so ausgelegt ist, dass es bestimmt, dass Videodaten und Sprachdaten des Videotelefonie-Anrufs an verschiedene Empfangseinheiten gesendet werden sollen, das Verarbeitungssystem (PS) ferner so ausgelegt ist, dass es einen Sprachanruf zum angerufenen Sprachanrufendgerät (VCT) aufbaut, um eine Videotelefonie-Verbindung mit einem Videotelefonie-Endgerät (VTT) aufzubauen, und einen Webserver (WS) zum Senden von Videodaten (VID) an den Webserver bestimmt, und das Multimedia-Gateway (MMGW) ferner ein Schaltsystem (SWS) zum Aufteilen von Videodaten (VID) und Sprachdaten (VOD1) des Videotelefonie-Anrufs umfasst, wobei das Schaltsystem (SWS) so ausgelegt ist, dass es Videodaten (VID) aus dem Videotelefonie-Stream extrahiert, Videodaten (VID) zum Webserver (WS) weiterleitet, erste Sprachdaten (VOD1) aus dem Videotelefonie-Stream extrahiert, erste Sprachdaten (VOD1) zur zweiten Empfangseinheit (RU2) weiterleitet, zweite Sprachdaten (VOD2) vom angerufenen Sprachanrufendgerät (VCT) über den Sprachanruf empfängt und die zweiten Sprachdaten (VOD2) zum Videotelefonie-Endgerät (VTT) weiterleitet.

14. Multimedia-Gateway (MMGW) nach Anspruch 13, wobei die Videotelefonie-Schnittstelle (11) so ausgelegt ist, dass sie einen Videotelefonie-Stream empfängt, der ein Standbild umfasst, die Webschnittstelle (12) so ausgelegt ist, dass sie ein Standbild sendet, das Verarbeitungssystem so ausgelegt ist, dass es bestimmt, dass das Standbild an einen Webserver (WS) gesendet werden muss, und das Schaltsystem (SWS) so ausgelegt ist, dass es das Standbild aus dem Videotelefonie-Stream extrahiert und das Standbild zum Webserver (WS) weiterleitet.

15. Computerprogramm zum Steuern eines Multimedia-Gateway (MMGW) auf eine Weise, dass das Multimedia-Gateway (MMGW) ein Verfahren gemäß einem der Ansprüche 1 bis 12 ausführt.

## Revendications

1. Procédé pour établir un appel de visiophonie en fournissant des données vidéo (VID) et des données vocales (VOD1) à un utilisateur d'une première unité de réception (RU1) fonctionnant selon un protocole Internet et d'une seconde unité de réception (RU2) des appels vocaux, le procédé comprenant les étapes consistant à :
- recevoir dans une passerelle multimédia (MMGW) un message d'établissement d'appel pour un appel de visiophonie, le message d'établissement d'appel émanant d'un terminal de visiophonie (VTT),
- établir une connexion de visiophonie ente le terminal de visiophonie (VTT) et la passerelle multimédia (MMGW),
- recevoir dans la passerelle multimédia (MMGW) un message comprenant des informations afin de contacter un terminal d'appels vocaux appelés (VCT) contenant la seconde unité de réception (RU2),
- déterminer dans la passerelle multimédia (MMGW) que les données vidéo et les données vocales de l'appel de visiophonie doivent être envoyées à des unités de réception différentes,
- établir dans la passerelle multimédia (MMGW) un appel vocal vers le terminal d'appels vocaux appelé (VCT),
- envoyer une demande afin de coder les données vidéo en un format de données vidéo approprié à la réception par une unité de réception (RU1) fonctionnant selon le protocole Internet,
- recevoir dans la passerelle multimédia (MMGW) un flux de visiophonie via la connexion de visiophonie, le flux de visiophonie contenant des données vidéo (VID) au format de données vidéo demandé et des premières données vocales (VOD1),
- extraire dans la passerelle multimédia (MMGW) les premières données vocales (VOD1) provenant du flux de visiophonie,
- envoyer par la passerelle multimédia (MMGW) les premières données vocales (VOD1) vers la seconde unité de réception (RU2),
- recevoir dans la passerelle multimédia (MMGW) les secondes données vocales (VOD2) provenant du terminal d'appel vocal appelé (VCT) via l'appel vocal,
- transmettre par la passerelle multimédia (MMGW) les secondes données vocales (VOD2)au terminal de visiophonie (VTT) via la connexion de visiophonie,
- extraire dans la passerelle multimédia (MMGW) les données vidéo (VID) provenant du flux de visiophonie afin d'envoyer les données vidéo vers la première unité de réception (RU1).

2. Procédé pour établir un appel de visiophonie selon la revendication 1, dans lequel le message d'établissement d'appel comprend une indication que les données vidéo et les données vocales de l'appel de visiophonie doivent être envoyées à différentes unités de réception.

3. Procédé pour établir un appel de visiophonie selon la revendication 1, dans lequel le message d'établissement d'appel comprend un nombre conformément à un plan de numérotation E.164 appelé numéro de partie, dans lequel le numéro conforme à un plan de numérotation E.164 est relatif à la passerelle multimédia (MMGW) et indique que les données vidéo et les données vocales de l'appel de visiophonie doivent être envoyées à différentes unités de réception.

4. Procédé pour établir un appel de visiophonie selon une quelconque des revendications précédentes, dans lequel la demande de coder des données vidéo en un format de données approprié à une réception par une unité de réception fonctionnant selon le protocole Internet est envoyée de la passerelle multimédia (MMGW) au terminal de visiophonie (VTT).

5. Procédé pour établir un appel de visiophonie selon une quelconque des revendications 1 à 3, dans lequel la passerelle multimédia (MMGW) envoie un message d'établissement d'appel à un portier afin de demander au portier de demander au terminal de visiophonie (VTT) de coder des données vidéo en un format de données vidéo approprié à une réception par une unité de réception fonctionnant selon le protocole Internet.

6. Procédé pour établir un appel de visiophonie selon une quelconque des revendications 1 à 3, dans lequel la passerelle multimédia (MMGW) envoie un message d'établissement d'appel à un serveur web afin de demander au serveur web de demander au terminal de visiophonie (VTT) de coder des données vidéo en un format de données vidéo approprié à une réception par une unité de réception fonctionnant selon le protocole Internet.

7. Procédé pour établir un appel de visiophonie selon une quelconque des revendications précédentes, dans lequel la demande de coder des données vidéo est envoyé comme un accusé de réception en réponse à une demande comprenant une indication du format de données vidéo, ladite demande étant envoyée depuis le terminal de visiophonie.

8. Procédé pour établir un appel de visiophonie selon une quelconque des revendications précédentes, comprenant l'étape consistant à déterminer par la passerelle multimédia (MMGW) un serveur web (WS) conformément à l'information de l'appel de visiophonie et à envoyer les données vidéo au serveur web.

9. Procédé pour établir un appel de visiophonie selon la revendication 8 comprenant les étapes consistant à :
- recevoir les données vidéo (VID) dans le serveur web (WS),
- mémoriser les données vidéo (VID) dans le serveur web (WS),
- fournir les données vidéo (VID) à la première unité de réception (RU1) par le serveur web (WS).

10. Procédé selon la revendication 9, comprenant les étapes suivantes consistant à :
- envoyer au moins une image immobile à la passerelle multimédia (MMGW) via la connexion de visiophonie,
- déterminer dans la passerelle multimédia (MMGW) que l'image immobile doit être envoyée au serveur web (WS), et
- envoyer l'image immobile au serveur web (WS).

11. Procédé pour établi un appel de visiophonie selon une quelconque des revendications 1 à 7, comprenant l'envoi des données vidéo à un portier en vue d'une transmission ultérieure à un serveur web.

12. Procédé selon une quelconque des revendications précédentes, dans lequel les premières données vocales (VOD1) et les secondes données vocales (VOD2) sont transcodées dans la passerelle multimédia (MMGW).

13. Passerelle multimédia (MMGW) adaptée afin de gérer un appel de visiophonie en fournissant un accès aux données vidéo (VID) et aux données vocales (VOD1) d'un appel de visiophonie à un utilisateur d'une première unité de réception (RU1) fonctionnant selon un protocole Internet et d'une seconde unité de réception (RU2) des appels vocaux, dans lequel la passerelle multimédia (MMGW) comprend une interface pour recevoir des messages et des interfaces (11 ;12 ;13)pour envoyer et recevoir des données vidéo (VID) et des données vocales (VOD1 ;VOD2), lesdites interfaces comprenant une interface de visiophonie (11) pour recevoir un flux de visiophonie contenant des données vidéo (VID) et des premières données vocales (VOD1) et pour transmettre des secondes données vocales (VOD2), une interface web (12) pour transmettre des données vidéo (VID), une interface d'appels vocaux (13) pour envoyer des premières données vocales (VOD1) et recevoir des secondes données vocales (vOD2) et une interface pour envoyer un message demandant au terminal de visiophonie (VTT) de coder les données vidéo en un format de données vidéo approprié à une réception par une unité de réception fonctionnant selon un protocole Internet, la passerelle multimédia (MMGW) comprenant en outre un système de traitement (PS) adapté afin de gérer un appel de visiophonie, dans lequel le système de traitement (PS) est adapté afin de déterminer que les données vidéo et les données vocales de l'appel de visiophonie doivent être envoyées à des unités de réception différentes, le système de traitement (PS) étant en outre adapté afin d'établir un appel vocal vers le terminal d'appels vocaux appelé (VCT) afin d'établir une connexion de visiophonie vers un terminal de visiophonie (VTT), et de déterminer un serveur web (WS) pour envoyer des données vidéo (VID) vers ledit serveur web, la passerelle multimédia (MMGW) comprenant en outre un système de commutation (SWS) pour séparer les données vidéo (VID) et les données vocales (VOD1) de l'appel de visiophonie, dans lequel le système de commutation (SWS) est adapté afin d'extraire les données vidéo (VID) du flux de visiophonie, de router les données vidéo (VID) vers le serveur web (WS), d'extraire les premières données vocales (VOD1) du flux de visiophonie, de router les premières données vocales (VOD1) vers la seconde unité de réception (RU2), de recevoir les secondes données vocales (VOD2) provenant du terminal d'appels vocaux appelé (VCT) via l'appel vocal et de router les secondes données vocales (VOD2) vers le terminal de visiophonie (VTT).

14. Passerelle multimédia (MMGW) selon la revendication 13, dans lequel l'interface de visiophonie (11) est adaptée afin de recevoir un flux de visiophonie comprenant une image immobile, l'interface web (12) est adaptée afin de transmettre une image immobile, le système de traitement est adapté afin de déterminer que l'image immobile doit être envoyée à un serveur web (WS) et le système de commutation (SWS) est adapté afin d'extraire l'image immobile du flux de visiophonie et de router l'image immobile vers le serveur web (WS).

15. Programme informatique pour commander une passerelle multimédia (MMGW) d'une manière telle que la passerelle multimédia (MMGW) exécute un procédé selon une quelconque des revendications 1 à 12.
